# EUROPEAN PATENT SPECIFICATION

(11) **EP 4 047 320 B1**
(45) Date of publication and mention of the grant of the patent: **19.11.2025**
(21) Application number: 22153848.1
(22) Date of filing: 28.01.2022
(51) Int. Cl.: G01C 23/00, G08G 5/21, G08G 5/26

(54) **SYSTEMS AND METHODS FOR LOW VISIBILITY GUIDANCE AND TAXI ROUTING**
SYSTEME UND VERFAHREN ZUR FÜHRUNG BEI SCHLECHTER SICHT UND ZUR TAXILEITWEGLENKUNG
SYSTÈMES ET PROCÉDÉS DE GUIDAGE À FAIBLE VISIBILITÉ ET DE ROULAGE AU SOL

(30) Priority: 17.02.2021 IN 202111006630; 01.04.2021 US 202117220334
(43) Date of publication of application: 24.08.2022
(73) Proprietor: Honeywell International Inc., Charlotte, NC 28202 (US)
(72) Inventor: MATHEW, Bincicil, Charlotte, 28202 (US); HE, Gang, Charlotte, 28202 (US); DESAI, Pavan Kumar, Charlotte, 28202 (US); R, Rakshit, Charlotte, 28202 (US); MEHBOOB, Roshini, Charlotte, 28202 (US); FEYEREISEN, Thea, Charlotte, 28202 (US)
(74) Representative: Ingrassia, Fisher & Lorenz UK Ltd.

(56) References cited:
- EP-A1- 3 200 171
- US-A1- 2014 303 815
- US-A1- 2017 083 231
- US-A1- 2019 043 164
- US-A1- 2019 228 668
- US-A1- 2020 168 109

## Description

### CROSS REFERENCE TO RELATED APPLICATION

This application claims priority to Indian Provisional Patent Application No. 202111006630, filed February 17, 2021.

### TECHNICAL FIELD

The following disclosure relates generally to systems and methods that provide aircraft guidance, and, more particularly, to systems and methods that provide low visibility surface movement guidance and taxi routing for an aircraft.

### BACKGROUND

Many pilots report that low visibility operations are the most technically challenging. Low visibility operations are those that occur when the runway visible range (RVR) is below 1200 feet (360m). Airports authorized for takeoff and/or landing or surface operations below RVR 1200 generally have a complete low visibility operation (LVO) surface movement guidance control system (SMGCS) plan (shortened herein to LVO plan) defined which covers planned low visibility operations and adequate visual cues. These LVO plans include low visibility taxi routes (LVTR).

Although pilots often rely on instrument navigation (INAV) systems during low visibility scenarios, a technical problem is presented in that the Low Visibility Taxi Routes (LVTR) are not generally displayed by typical navigational display systems due to an unavailability of data and/or display clutter issues systems. Instead, in a low visibility scenario, a pilot may have to reference an LVO plan in the form of a static digital chart, presented on a separate display screen. It can be technically challenging for the pilot to look for the relevant low visibility taxi route on the separately displayed chart that is not cross linked to his moving map display, and, further, to orient himself with respect to his current position on that separately displayed chart. In other scenarios, when LVO route data and other airport taxi guidance data and objects data are presented, constantly, on a navigational display, the navigation display can be too cluttered and this can be technically challenging for the pilot to understand low visibility routes and operation constraints conditions. These low visibility scenarios can result in runway and/or taxiway incursions if not safely addressed.

Accordingly, technologically improved aircraft guidance systems and methods that provide low visibility surface movement guidance and taxi routing are desirable. Furthermore, other desirable features and characteristics of the present invention will be apparent from the subsequent detailed description and the appended claims, taken in conjunction with the accompanying drawings and the foregoing technical field and background. Documents cited during prosecution include US 2020/168109 A1.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Provided is a system for low visibility surface movement guidance for an aircraft navigating an airport environment in accordance with Claim 1.

A processor-implemented method in accordance with Claim 7 is also provided.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWINGS

At least one example of the present invention will hereinafter be described in conjunction with the following figures, wherein like numerals denote like elements, and:
FIG. 1 is a block diagram of a system providing low visibility guidance and taxi routing for an aircraft, as illustrated in accordance with an exemplary embodiment of the present disclosure;
FIG. 2 is an architectural block diagram of one or more application modules that may be operating in the system shown in FIG. 1, in accordance with an exemplary embodiment of the present disclosure;
FIGS. 3-8 depict various avionic display examples that the system of FIG. 1 may generate, in accordance with an exemplary embodiment of the present disclosure; and
FIG. 9 is a flow chart of a method providing low visibility guidance and taxi routing for an aircraft, as may be implemented by the system of FIG. 1, in accordance with an exemplary embodiment of the present disclosure.

### DETAILED DESCRIPTION

The following Detailed Description is merely exemplary in nature and is not intended to limit the invention or the application and uses of the invention. The term "exemplary," as appearing throughout this document, is synonymous with the term "example" and is utilized repeatedly below to emphasize that the description appearing in the following section merely provides multiple non-limiting examples of the invention and should not be construed to restrict the scope of the invention, as set-out in the Claims, in any respect. As further appearing herein, the term "pilot" encompasses all users of the below-described aircraft system.

As mentioned, Low visibility operations are those that occur when the runway visual range (RVR) is below 1200 feet (360m). Airports authorized for takeoff and/or landing or surface operations below RVR 1200 generally have a complete low visibility operation (LVO)SMGCS plan defined which covers planned low visibility operations and adequate visual cues. This LVO/SMGCS plan contains, for an airport, each low visibility operation and Low Visibility Taxi Route (LVTR), described in detail, along with any supporting facilities and aircraft equipment requirements.

Although pilots often rely on instrument navigation (INAV) systems during low visibility scenarios, Low Visibility Taxi Routes (LVTR) are not generally displayed by INAV systems. Instead, pilots conducting low visibility operations at an airport authorized for low visibility operations are required to have a copy of the LVO/SMGCS plan, generally provided as a static digital chart, via an appropriate National Ocean Service (NOS) and Jeppesen chart. In a low visibility scenario, a pilot may have to reference the LVO plan in the digital chart, generally, by displaying it on a separate display screen that is not cross linked to the airport moving map image. It technically challenging for the pilot to look for the relevant taxi route on the separately displayed chart and, further, to orient himself with respect to finding his (dynamically changing) current position on the separately displayed chart.

As a result, during low visibility scenarios, and at the busier and more complex airports, pilots may taxi with more caution, at slower speeds, and sometimes with a less-than-ideal awareness of where they are on the airport surface. Additionally, low visibility scenarios often result in delays in taxiing because a pilot may be reliant on ground control having to tell him every turn and where he is at a given point in time.

Accordingly, low visibility operations provide several technical problems, and improved aircraft guidance systems and methods that provide low visibility guidance and taxi routing are desirable. The present disclosure provides a solution to the above problems in the form of systems and methods for low visibility guidance and taxi routing. The present disclosure can provide low visibility guidance and taxi routing on an airport moving map, and can cross link the low visibility guidance display to the appropriate LVO plan chart.

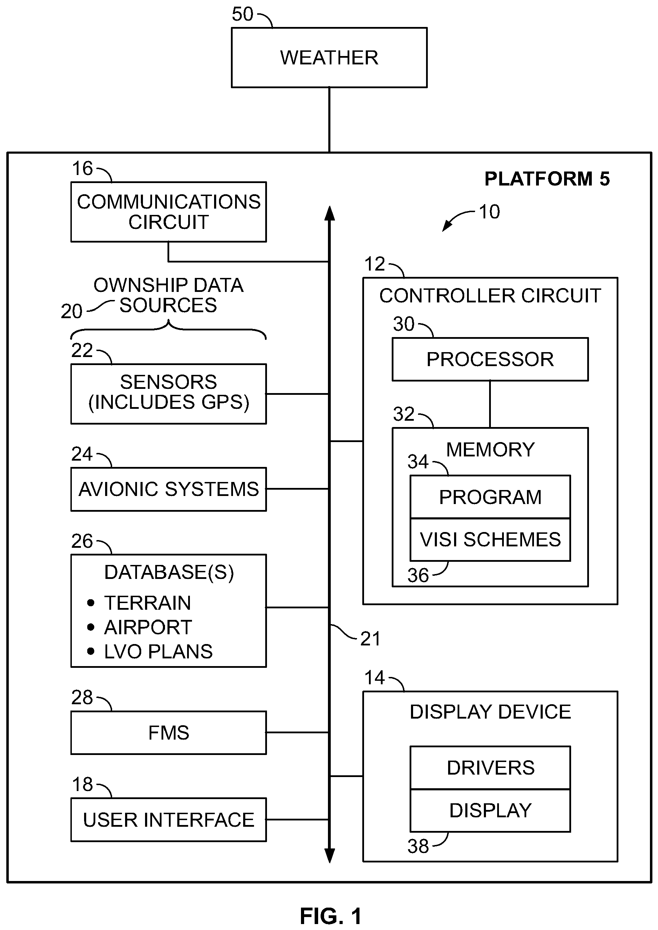

FIG. 1 is a block diagram of a system 10 for low visibility guidance and taxi routing, as illustrated in accordance with an exemplary and non-limiting embodiment of the present disclosure. The system 10 for low visibility guidance and taxi routing may be utilized onboard a mobile platform 5 to provide enhanced low visibility guidance, as described herein. In various embodiments, the mobile platform is an aircraft 5, which carries or is equipped with the system 10 for an instrument landing system (ILS) landing operation. As schematically depicted in FIG. 1, system 10 for an instrument landing system (ILS) alerting for an aircraft (shortened herein to "system" 10) includes the following components or subsystems, each of which may assume the form of a single device or multiple interconnected devices: a controller circuit 12 operationally coupled to: at least one display device 14; a communications circuit 16; a user interface 18, and one or more ownship data sources **20.** In various embodiments, the controller circuit **12** communicates with the other components of the system **10** via a communication bus **21.**

The display device **14** can include any number and type of image generating devices on which one or more avionic displays **36** may be produced. The display device **14** may embody a touch screen display. When the system **10** is utilized for a manned Aircraft, display device **14** may be affixed to the static structure of the Aircraft cockpit as, for example, a Head Down Display (HDD) or Head Up Display (HUD) unit. Alternatively, display device **14** may assume the form of a movable display device (e.g., a pilot-worn display device) or a portable display device, such as an Electronic Flight Bag (EFB), a laptop, or a tablet computer carried into the Aircraft cockpit by a pilot.

The communications circuit **16** generally includes an antenna, which may wirelessly transmit data to and receive real-time data and signals from various external sources, including, each of: weather service source **50**, traffic, air traffic control (ATC), ILS antennas (glide slope and localizer), ground stations, and the like.

The user interface **18** may include any combination of a keyboard, cursor control device, voice input device, gesture input apparatus, or the like.

The ownship data sources **20** generally include an array of flight parameter and geographic positioning system (GPS) sensors **22,** onboard avionic systems **24,** and a database **26.** The ownship data sources may include a flight management system (FMS) **28.** The ownship data sources **20** are further described below.

Flight parameter and GPS sensors **22** supply various types of data or measurements to controller circuit **12** during Aircraft flight. In various embodiments, the sensors **22** supply, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight path data, flight track data, radar altitude data, and geometric altitude data.

Onboard avionic systems **24** provide feedback and control for the engine and flight configuration equipment.

The database **26** may, in practice, be realized as one or more different onboard databases, each being a computer-readable storage media or memory. In various embodiments, two- or three-dimensional map data may be stored in a database **26,** including airport features data, geographical (terrain), buildings, bridges, and other structures, street maps, and navigational databases, which may be updated on a periodic or iterative basis to ensure data timeliness. With respect to the present system **10,** the database **26** stores and is a source for at least one low visibility operation (LVO) plan, each LVO plan being specific to an airport, each LVO plan providing an available low visibility taxi route (LVTR) option to get to a target airport point of interest at the airport. In an example the target airport point of interest at the airport is a target runway. This map data and LVO plan data may be uploaded into the database **26** at an initialization step and then periodically updated, as directed by either a program **34** update or by an externally triggered update.

Although schematically illustrated in FIG. 1 as a single unit, the individual elements and components of the system **10** can be implemented in a distributed manner utilizing any practical number of physically distinct and operatively interconnected pieces of hardware or equipment. When the system **10** is utilized as described herein, the various components of the system **10** will typically all be located onboard the Aircraft **5.** In various embodiments, the system **10** may be separate from or integrated within: a flight management system (FMS) and/or a flight control system (FCS).

The term "controller circuit," as appearing herein, broadly encompasses those components utilized to carry-out or otherwise support the processing functionalities of the system **10.** Accordingly, controller circuit **12** can be implemented as a programmable logic array, application specific integrated circuit, system on a chip (SOC), or other similar firmware, as well as by a combination of any number of individual processors, flight control computers, navigational equipment pieces, computer-readable storage devices (including or in addition to memory **32),** power supplies, storage devices, interface cards, and other standardized components.

In various embodiments, controller circuit **12** embodies an enhanced computer processer, having one or more processors **30** operationally coupled to computer-readable storage media or memory **32,** having stored therein at least one novel firmware or software program **34** (generally, computer-readable instructions that embody an algorithm) for carrying-out the various process tasks, calculations, and control/display functions described herein. During operation, the controller circuit **12** may be programmed with and execute the at least one firmware or software program, for example, program **34,** that embodies an algorithm for receiving, processing, and displaying, LVO guidance for an aircraft **5,** to thereby perform the various process steps, tasks, calculations, and control/display functions described herein.

Controller circuit **12** may exchange data, including real-time wireless data, with one or more external sources, such as the weather service source **50** to support operation of the system **10** in embodiments. In this case, the controller circuit **12** may utilize the communications circuit **16** to manage bidirectional wireless data exchange over a communications network, such as a public or private network implemented in accordance with Transmission Control Protocol/Internet Protocol architectures or other conventional protocol standards. Encryption and mutual authentication techniques may be applied, as appropriate, to ensure data security. In various embodiments, the communications circuit **16** is integrated within the controller circuit **12.**

Memory **32** is a data storage that can encompass any number and type of storage media suitable for storing computer-readable code or instructions, such as the aforementioned software program **34,** as well as other data generally supporting the operation of the system **10.** Memory **32** may also store and be the source of one or more preprogrammed visualization schemes **36,** for use by the algorithm embodied in software program **34.** Each visualization scheme **36** includes a set of rules for using visually distinguishing techniques, such as using a highlight color, a highlight box, or a bright color that is not otherwise used by elements in the AMM to show the LVTR or a preferred taxi route (PTR). A PTR may be a user selected taxi route for use during LVO, from among a plurality of LVTR, or it may be separately input by a user. In cases in which black and white displays are relied upon, the visually distinguishing techniques may include changing line thicknesses and/or using dashed/dotted lines. Additionally, one or more visualization schemes may employ a series of sequential arrows to indicate directionality for a relevant LVTR or PTR.

In certain embodiments of system **10,** the controller circuit **12** and the other components of the system **10** may be integrated within or cooperate with any number and type of systems commonly deployed onboard an aircraft including, for example, an FMS, an Attitude Heading Reference System (AHRS), an Instrument Landing System (ILS), and/or an Inertial Reference System (IRS).

With continued reference to FIG. 1, the display device **14** includes the necessary display drivers to generate at least one avionic display **38** during operation of the system **10;** the term "avionic display" defined as synonymous with the term "aircraft-related display" and "cockpit display" and encompasses displays generated in textual, graphical, cartographical, and other formats. In various embodiments, the avionic display **38** is a primary flight display (PFD) or a navigation display. In various embodiments, the avionic display **38** can be, or include, any of various types of lateral displays and vertical situation displays on which map views and symbology, text annunciations, and other graphics pertaining to flight planning are presented for a pilot to view. The avionic display **38** generated and controlled by the system **10** can include graphical user interface (GUI) objects and alphanumerical input displays of the type commonly presented on the screens of MCDUs, as well as Control Display Units (CDUs) generally. Specifically, embodiments of avionic displays **38** include one or more two dimensional (2D) avionic displays, such as a horizontal (i.e., lateral) navigation display or vertical navigation display; and/or on one or more three dimensional (3D) avionic displays, such as a Primary Flight Display (PFD) or an exocentric 3D avionic display. The display device **14** is configured to continuously render at least a lateral display **38** showing the aircraft **5** at its current location and trajectory within the relevant map data, e.g., an airport moving map (AMM).

In various embodiments, a human-machine interface, such as the above described touch screen display, is implemented as an integration of the user interface **18** and a display device **14.** Via various display and graphics systems processes, the controller circuit **12** may command and control the touch screen display generating a variety of graphical user interface (GUI) objects or elements described herein, including, for example, buttons, sliders, and the like, which are used to prompt a user to interact with the human-machine interface to provide user input, and to activate respective functions and provide user feedback, responsive to received user input at the GUI element.

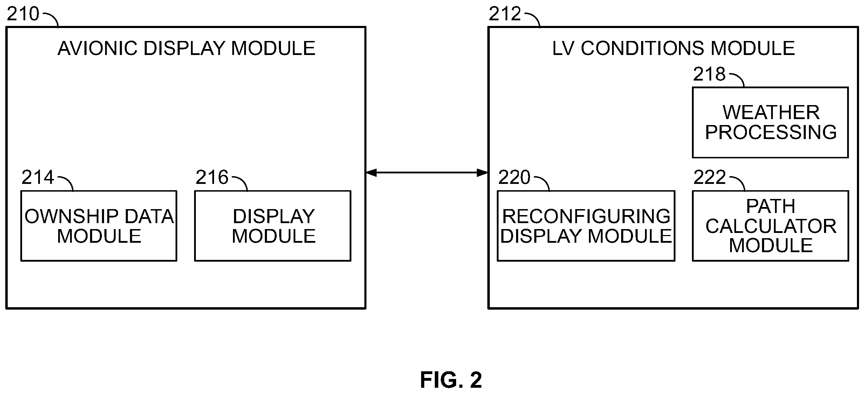

FIG. 2 provides an architectural block diagram of one or more application modules that may be operating in the system **10.** In various embodiments, the applications modules may be embodied as blocks of hardware or software programming instructions, such as program **34.** In various embodiments, the system **10** may include an avionic display module **210** and a low voltage (LV) conditions module **212,** that are configured to process the display of an avionic display **38** and determination that low visibility (LV) conditions are occurring, as a function of the weather data; process the reconfiguration of the avionic display to present the LVO plan for the airport (in accordance with the visualization scheme for rendering low visibility (LV) features in the LVO plan), responsive to determining that LV conditions are occurring; calculate an optimized taxi route for the aircraft to a target airport point of interest, as a function of the LVO plan, responsive to determining that LV conditions are occurring; and render the optimized taxi route on the reconfigured avionic display. In other embodiments, one or more modules may operate on separate computing devices. For example, in various embodiments, the avionic display module **210** may be configured to operate on an aircraft **5,** and the LV conditions module **212** may be configured to operate on a mobile device.

In various embodiments, the avionic display module **210** is configured with an ownship data module **214** for receiving or actively acquiring ownship data from the various ownship data sources **20**. The avionic display module **210** may also have a display module **216** that is configured to drive the display device **14** to render the avionic display(s) **38,** based at least in part on the data from the ownship data sources **20**, such as aircraft status data. In various embodiments, the avionic display module **210** is configured to respond to commands from the LV conditions module **212** to present the reconfigured avionic display **38.**

The LV conditions module **212** receives input from a source configured to provide an enable for a low-visibility setting ("the enable source"). Theenable source is the weather processing module **218,** which has processed the weather data received from the external weather service source **50** with various thresholds and decision algorithms (e.g., in program **34)** and determined that low visibility conditions are occurring at a target airport point of interest The weather processing module **218** may determine that low visibility (LV) conditions are occurring by comparing an aspect of the weather data (e.g., a visibility distance) to a preprogrammed runway visibility threshold (e.g., also a distance). In some embodiments, the enable source is a user input, such as, when a pilot hears a RVR setting and presses a button on a user interface. Additionally, the enable source may be a speaker providing speech input, such could be provided by an ATIS radio announcement.

Regardless of the enable source , responsive to receiving the enable for the low-visibility setting, the LV conditions module **212** determines that low visibility conditions are occurring and is configured with a reconfiguring display module **220** and a path calculator module **222,** that each operate responsive to the determination that low visibility conditions are occurring. The reconfiguring display module **220** may, in response to the determination that low visibility conditions are occurring, reference the stored LVO plan providing an available low visibility taxi route (LVTR) option for the airport, and reference the preprogrammed visualization scheme, and, based thereon, reconfigure the avionic display **38** to present the LVO plan for the airport, in accordance with the visualization scheme. Specifically, "present the LVO plan for the airport, in accordance with the visualization scheme" means at least displaying an airport moving map (AMM) and visually distinguishing relevant LVTR information on the moving map from other elements presented on the moving map. As mentioned, the visually distinguishing techniques include using arrows and color distinctions to distinguish a LVTR from other elements displayed in the AMM. In various embodiments, the LV conditions module may reconfigure the avionic display **38** to present the LVO plan for the airport, in accordance with the visualization scheme responsive to a user request received via the user interface **18.**

As may be appreciated, in embodiments in which the pilot wants to use a PTR, in response to the determination that low visibility conditions are occurring, the reconfiguring display module 220, may reference the PTR, and reference the preprogrammed visualization scheme, and, based thereon, reconfigure the avionic display **38** to present the PTR plan for the airport, in accordance with the visualization scheme.

In various embodiments, the LVO plan is one of a plurality of LVO plans for the airport that are stored in database **26.** In various embodiments, the visualization scheme is one of a plurality of visualization schemes stored in memory **32.**

In various embodiments, "reconfiguring the avionic display **38"** includes generating display commands for the display device **14** and communicating them to the avionic display module **210.**

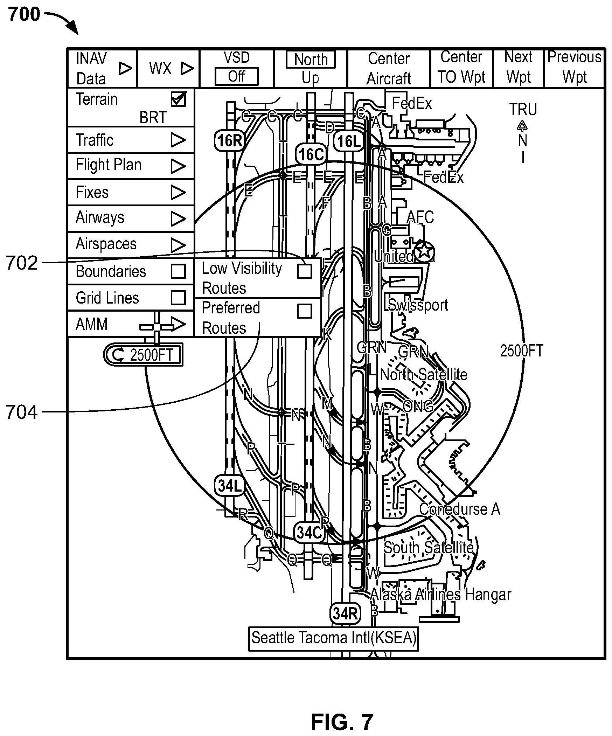

As mentioned, the system **10** may be configured to accept a user request to display the LVO plan chart, cross referenced to an existing lateral display view. Accordingly, in various embodiments, reconfiguring the avionic display **38** further includes generating display commands for the display device **14** to render the avionic display **38** having two areas: one area in which to render the LVO plan from the published chart, alongside a second area for the above described moving map. In embodiments in which the PTR is selected, reconfiguring the avionic display **38** further includes generating display commands for the display device **14** to render the avionic display **38** having two areas: one area in which to render aPTR plan from the published chart, alongside a second area for the above described moving map. The system **10** provides a crosslinkage between the AMM and the invoked chart (see FIG. 7).

The path calculator module **222** may be configured to identify a target airport point of interest, as a function of the LVO plan, and calculate an optimized taxi route for the aircraft to the target airport point of interest. In various embodiments, the path calculator module **222** may be configured to identify a target airport point of interest, as a function of the PTR plan, and calculate an optimized taxi route for the aircraft to the target airport point of interest. In various embodiments, the target airport point of interest is a target runway. In some embodiments, the target point of interest is provided by the FMS **28.** In some embodiments, the target point of interest is provided by a user, via the user interface **18.**

The path calculator module **222** is configured to render the optimized taxi route on the reconfigured avionic display **38.** In various embodiments, rendering the optimized taxi route on the reconfigured avionic display **38** includes generating display commands for the display device **14,** and communicating them to the avionic display module **210.** In various embodiments, the path calculator module **222** may, responsive to determining that LV conditions are occurring, predict an optimized runway for the aircraft at the airport; and prompt a user to request the optimized runway when it is different than the target runway.

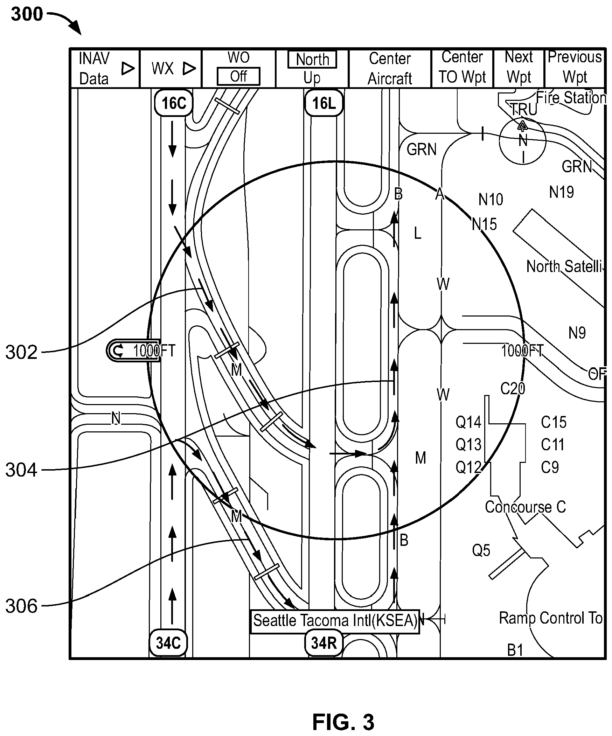

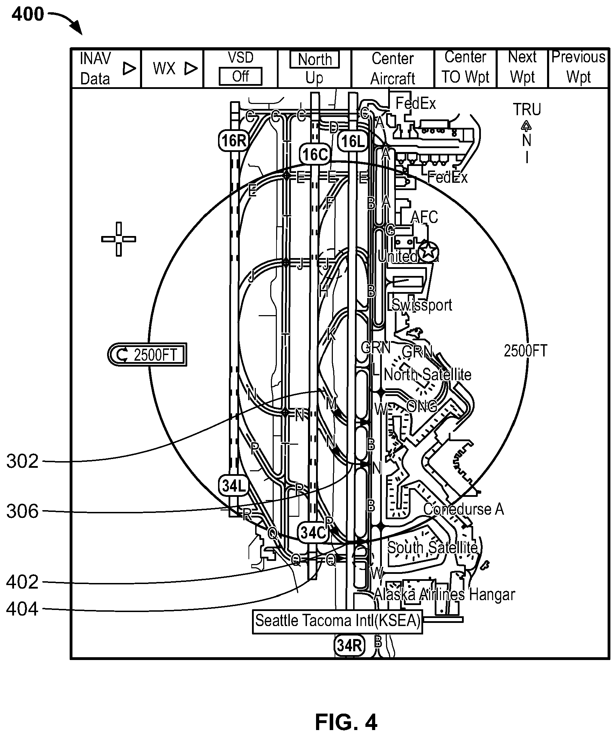

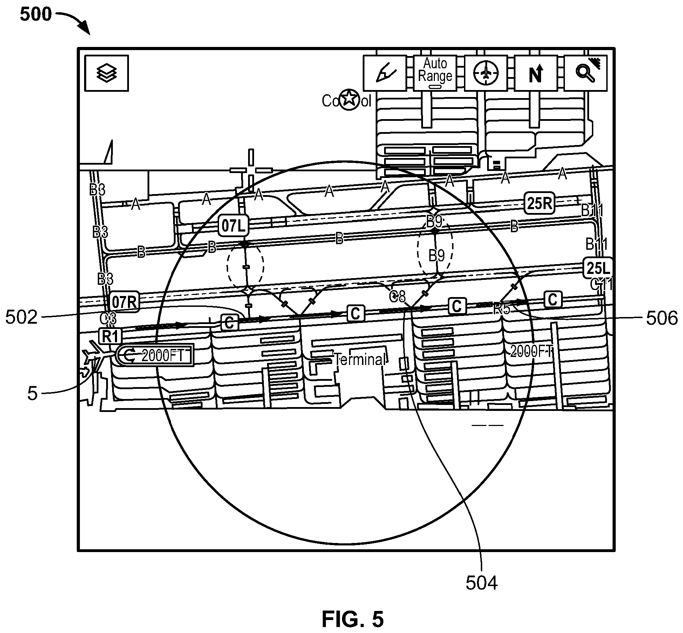

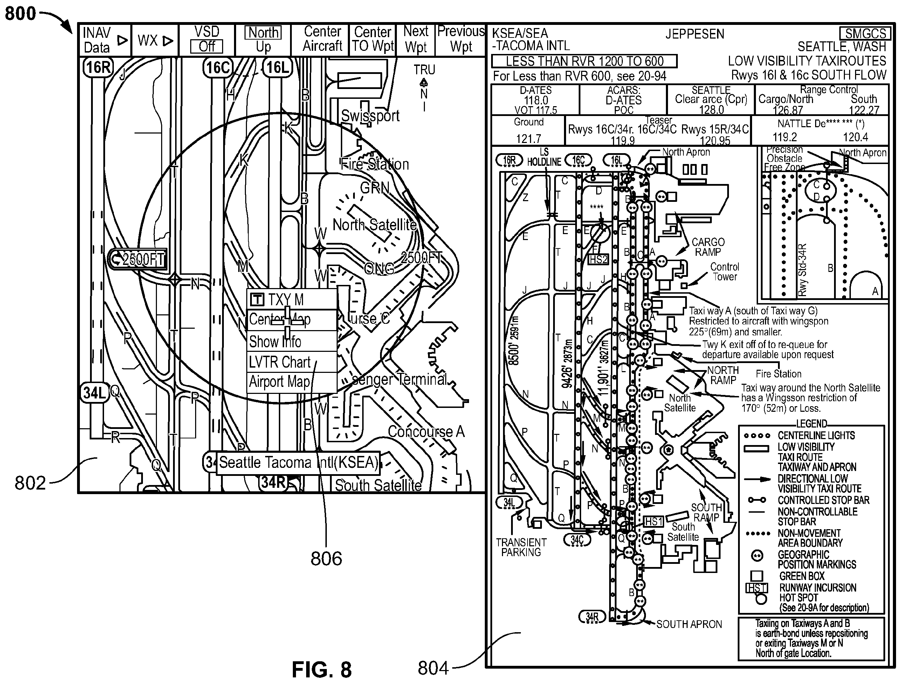

Turning now to FIGS. 3-8, various views of an avionic display **3** are provided. Each view presents an airport moving map (AMM) that has been reconfigured to depict the low visibility guidance and taxi routing provided by the system **10.** AMM **300** depicts various LVTR at the Seattle-Tacoma Intl airport. Arrows **302**, **304**, and **306** are arranged to show exit paths from a runway 34C/16C, across a runway 34R/16L. In AMM **300**, the range ring is set to 1000 ft. In FIG. 4, the range ring is set to 2500 ft, showing more of the airport surface. Accordingly, AMM **400** depicts additional paths using arrows **402** and **404**. On AMM **500,** the preferred taxi route (PTR) is indicated with arrows **502**, **504**, and **506**. In various embodiments, the system **10** offers a declutter option, in which, responsive to a pilot input selecting it, the non-PTR taxi routes are de-emphasized.

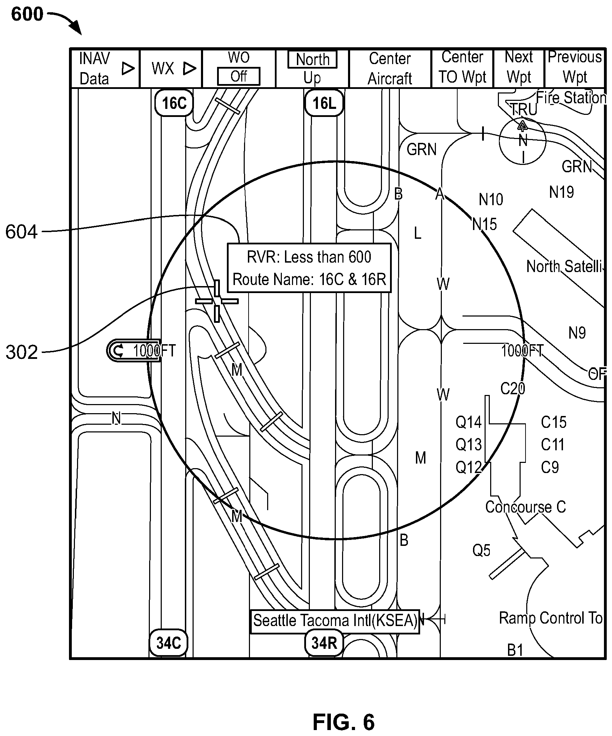

In various embodiments, a user may select a route, as shown in FIG. 6. The LVTR and PTR has been displayed in highlighted boxes, and in response to a pilot selection of one of them, the controller circuit **12** may render the applicable RVR, route name, and associated runway. In FIG. 6, the cursor **602** is shown to have selected the LVTR, and a text box **604** is shown, displaying an alphanumeric message, "RVR: less than 600 [ft], Route name **16C** and **16R.**

AMM 700 illustrates user input options that various embodiments provide. In the example, the system 10 may prompt a user to request the optimized runway when it is different than the target runway. The user may opt to display all low visibility routes by selecting a graphical user interface (GUI) object **702,** or may opt to only display preferred routes, by selecting GUI object **704.**

In AMM **800,** in response to a user input selecting (at **806)** this view, the area of the avionic display **38** is split to render the AMM on a first area **802** and a cross-linked published LVO chart on a second area **804.** In various embodiments, the first area and the second area are each half of a total display area of the avionic display **38.**

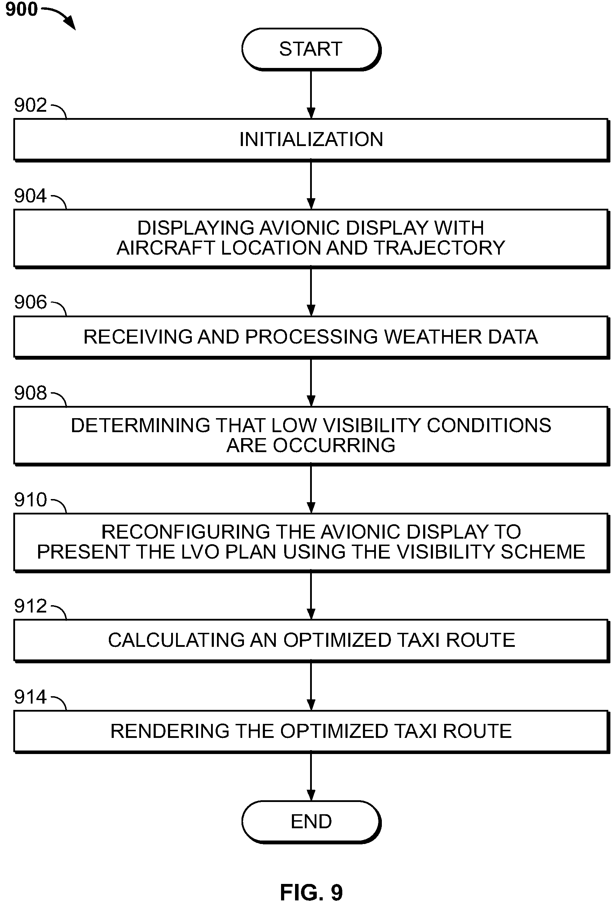

Turning now to FIG. 9, the system **10** described above may be implemented by a processor-executable method **900** providing low visibility guidance and taxi routing for an aircraft. For illustrative purposes, the following description of method **900** may refer to elements mentioned above in connection with FIG. 1. In practice, portions of method **900** may be performed by different components of the described system. It should be appreciated that method **900** may include any number of additional or alternative tasks, the tasks shown in FIG. 9 need not be performed in the illustrated order, and method **900** may be incorporated into a more comprehensive procedure or method having additional functionality not described in detail herein. Moreover, one or more of the tasks shown in FIG. 9 could be omitted from an embodiment of the method **900** as long as the intended overall functionality remains intact.

**At 902,** the system **10 is** initialized. Initialization may include loading instructions and program **34** into a processor **30** within the controller circuit **12,** as well as loading at least one visualization scheme **36.** At **904,** the system **10** is displaying the avionic display **38** showing the aircraft **5** at its current location and with its current trajectory. At **906,** weather data is being received and processed. At **908,** the relevant weather data is compared to various thresholds and processed by the algorithms in program **34** to determine whether a low visibility condition is occurring at a target airport. At **910,** upon the determination that a low visibility condition is occurring, the system **10** reconfigures the avionic display to present the LVO plan using the visibility scheme, as described above. At **912,** the system 10 calculates an optimized taxi route. At **914,** the system renders the optimized taxi route.

Thus, enhanced aircraft guidance systems and methods providing low visibility guidance and taxi routing for an aircraft are provided. The provided methods and systems provide an objectively improved human-machine interface with map views, clear indications of the LVTR and/or PTR, and cross-referencing to the appropriate LVO plan chart. The provided enhanced features provide a user with increased confidence about the surroundings during low visibility operations in a landing area.

Although an exemplary embodiment of the present disclosure has been described above in the context of a fully-functioning computer system (e.g., system **10** described above in conjunction with FIG. 1), those skilled in the art will recognize that the mechanisms of the present disclosure are capable of being distributed as a program product (e.g., an Internet-disseminated program or software application) and, further, that the present teachings apply to the program product regardless of the particular type of computer-readable media (e.g., hard drive, memory card, optical disc, etc.) employed to carry-out its distribution.

Terms such as "comprise," "include," "have," and variations thereof are utilized herein to denote non-exclusive inclusions. Such terms may thus be utilized in describing processes, articles, apparatuses, and the like that include one or more named steps or elements but may further include additional unnamed steps or elements. While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. Various changes may be made in the function and arrangement of elements described in an exemplary embodiment without departing from the scope of the invention as set-forth in the appended Claims.

## Claims

1. A system for low visibility surface movement guidance for an aircraft navigating an airport environment, comprising:
a source (20) of aircraft status data;
a display device (14) configured to render an avionic display showing a location and trajectory of the aircraft, using the aircraft status data;
a source (50) of weather data, wherein the source of weather data is an external weather service source;
an enable source configured to provide an enable for a low-visibility setting, wherein the enable source is a weather processing module (218) configured to receive weather data from the source of weather data and to process the weather data to determine, using various thresholds and decision algorithms, whether low visibility conditions are occurring at a target airport point of interest;
a source (26) of a low visibility operation (LVO) plan, the LVO plan providing an available low visibility taxi route (LVTR) options for a taxi operation target at the airport;
a source (32) of a visualization scheme, the visualization scheme being a scheme for rendering low visibility (LV) features in the LVO plan;
and
a controller circuit (12) operationally coupled to the source of aircraft status data, the display device, the source of the LVO plan, the weather processing module, the source of the visualization scheme, and the source of weather data, the controller circuit configured to:
receive the enable for the low-visibility setting from the weather processing module;
determine that low visibility (LV) conditions are occurring, responsive to the enable for the low-visibility setting;
reconfigure the avionic display to present the LVO plan, in accordance with the visualization scheme, responsive to determining that LV conditions are occurring;
wherein the system further comprises a path calculator module (222) configured to calculate an optimized taxi route for the aircraft to the target airport point of interest, as a function of the LVO plan, responsive to determining that LV conditions are occurring; and
render the optimized taxi route on the reconfigured avionic display, and
wherein the target airport point of interest is a target runway, and the controller circuit (12) is further configured to:
predict an optimized runway for the aircraft at the airport, responsive to determining that LV conditions are occurring; and
prompt a user to request the optimized runway when it is different than the target runway.

2. The system of claim 1, wherein the avionic display is a primary flight display (PFD) or a navigation display.

3. The system of claim 1, wherein the controller circuit is further configured to render the avionic display to have an airport moving map, AMM, on a first area and a published LVO chart on a second area, responsive to a user input.

4. The system of claim 1, further comprising a flight management system (28), FMS, and wherein the controller circuit is further configured to receive the target airport point of interest from the FMS.

5. The system of claim 1, further comprising a user input interface (18), and wherein the controller circuit is further configured to receive the target airport point of interest from the user input interface.

6. A processor-implemented method for providing low visibility surface movement guidance for an aircraft navigating an airport environment, comprising:
rendering, on a display device, an avionic display showing a location and trajectory of the aircraft, using received aircraft status data;
receiving weather data from an external weather service source (50);
determining that low visibility conditions are occurring by processing the received weather data to determine, using various thresholds and decision algorithms, whether low visibility conditions are occurring at a target airport point of interest;
referencing a LVO plan providing an available low visibility taxi route (LVTR) option for a target runway at the airport, or a preferred taxi route (PTR), responsive to determining that low visibility (LV) conditions are occurring;
reconfiguring the avionic display to present the LVO plan or a PTR plan, rendered in accordance with a preprogrammed visualization scheme for rendering LV features, responsive to determining that LV conditions are occurring;
calculating, using a path calculator module (222) an optimized taxi route for the aircraft to the target airport point of interest, as a function of the LVO plan, responsive to determining that LV conditions are occurring; and
rendering the optimized taxi route on the reconfigured avionic display, wherein the target airport point of interest is a target runway, and further comprising:
predicting an optimized runway for the aircraft at the airport, responsive to determining that LV conditions are occurring; and
prompting a user to request the optimized runway when it is different than the target runway.

7. The method of claim 6, further comprising rendering the avionic display to have an AMM on a first area and a published LVO chart on a second area, responsive to a user input.

8. The method of claim 6, further comprising receiving the target airport point of interest from a flight management system (FMS).

9. The method of claim 6, further comprising receiving the target airport point of interest from a user input interface.

## Patentansprüche

1. System zur Schlechtsicht-Bodenbewegungsführung für ein Flugzeug, das eine Flughafenumgebung befährt, umfassend:
eine Quelle (20) von Flugzeugstatusdaten;
eine Anzeigevorrichtung (14), die dazu konfiguriert ist, eine Avionikanzeige, die einen Ort und eine Flugbahn des Flugzeugs zeigt, unter Verwendung der Flugzeugstatusdaten wiederzugeben;
eine Quelle (50) von Wetterdaten, wobei die Quelle von Wetterdaten eine externe Wetterdienstquelle ist;
eine Freigabequelle, die dazu konfiguriert ist, eine Freigabe für eine Schlechtsicht-Situation bereitzustellen, wobei die Freigabequelle ein Wetterverarbeitungsmodul (218) ist, das dazu konfiguriert ist, Wetterdaten von der Quelle von Wetterdaten zu empfangen und die Wetterdaten dazu zu verarbeiten, unter Verwendung verschiedener Schwellenwerte und Entscheidungsalgorithmen, zu bestimmen, ob Schlechtsicht-Bedingungen an einem Zielflughafenpunkt von Interesse auftreten;
eine Quelle (26) eines Schlechtsicht-Betriebs-(LVO-)Plans, wobei der LVO-Plan eine verfügbare Schlechtsicht-Rollrouten-(LVTR-)Option für ein Rollbetriebsziel an dem Flughafen bereitstellt;
eine Quelle (32) eines Visualisierungsschemas, wobei das Visualisierungsschema ein Schema zum Wiedergeben von Schlechtsicht-(LV-)Merkmalen in dem LVO-Plan ist;
und
eine Steuerungsschaltung (12), die betriebsfähig mit der Quelle von Flugzeugstatusdaten, der Anzeigevorrichtung, der Quelle des LVO-Plans, dem Wetterverarbeitungsmodul, der Quelle des Visualisierungsschemas und der Quelle von Wetterdaten gekoppelt ist, wobei die Steuerungsschaltung dazu konfiguriert ist:
die Freigabe für die Schlechtsicht-Situation von dem Wetterverarbeitungsmodul zu empfangen;
zu bestimmen, dass Schlechtsicht-(LV-)Bedingungen auftreten, als Antwort auf die Freigabe für die Schlechtsicht-Situation;
die Avionikanzeige neu zu konfigurieren, um den LVO-Plan gemäß dem Visualisierungsschema darzustellen, als Antwort auf das Bestimmen, dass die LV-Bedingungen auftreten;
wobei das System ferner ein Pfadberechnungsmodul (222) umfasst, das dazu konfiguriert ist, eine optimierte Rollroute für das Flugzeug zu dem Zielflughafenpunkt von Interesse als eine Funktion des LVO-Plans zu berechnen, als Antwort auf das Bestimmen, dass LV-Bedingungen auftreten; und
die optimierte Rollroute auf der neu konfigurierten Avionikanzeige wiederzugeben, und wobei der Zielflughafenpunkt von Interesse eine Zielrollbahn ist, und die Steuerungsschaltung (12) ferner dazu konfiguriert ist:
eine optimierte Rollbahn für das Flugzeug an dem Flughafen vorherzusagen, als Antwort auf das Bestimmen, dass die LV-Bedingungen auftreten; und
einen Benutzer aufzufordern, die optimierte Rollbahn anzufragen, wenn sie sich von der Zielrollbahn unterscheidet.

2. System nach Anspruch 1, wobei die Avionikanzeige eine Primärfluganzeige (PFD) oder eine Navigationsanzeige ist.

3. System nach Anspruch 1, wobei die Steuerungsschaltung ferner dazu konfiguriert ist, die Avionikanzeige so wiederzugeben, dass sie auf einem ersten Bereich eine Flughafenbewegungskarte, AMM, und auf einem zweiten Bereich ein veröffentlichtes LVO-Diagramm als Antwort auf eine Benutzereingabe wiedergibt.

4. System nach Anspruch 1, ferner umfassend ein Flugmanagementsystem (28), FMS, und wobei die Steuerungsschaltung ferner dazu konfiguriert ist, den Zielflughafenpunkt von Interesse von der FMS zu empfangen.

5. System nach Anspruch 1, ferner umfassend eine Benutzereingabeschnittstelle (18), und wobei die Steuerungsschaltung ferner dazu konfiguriert ist, den Zielflughafenpunkt von Interesse von der Benutzereingabeschnittstelle zu empfangen.

6. Prozessorimplementiertes Verfahren zum Bereitstellen einer Schlechtsicht-Bodenbewegungsführung für ein Flugzeug, das eine Flughafenumgebung befährt, umfassend:
Wiedergeben, auf einer Anzeigevorrichtung, einer Avionikanzeige, die einen Ort und eine Flugbahn des Flugzeugs zeigt, unter Verwendung von empfangenen Flugzeugstatusdaten;
Empfangen von Wetterdaten von einer externen Wetterdienstquelle (50);
Bestimmen, dass Schlechtsicht-Bedingungen auftreten, durch Verarbeiten der empfangenen Wetterdaten, um unter Verwendung verschiedener Schwellenwerte und Entscheidungsalgorithmen, zu bestimmen, ob Schlechtsicht-Bedingungen an einem Zielflughafenpunkt von Interesse auftreten;
Referenzieren eines LVO-Plans, der eine verfügbare Schlechtsicht-Rollrouten-(LVTR-)Option für eine Zielrollbahn an dem Flughafen oder eine bevorzugte Rollroute (PTR) bereitstellt, als Antwort auf das Bestimmen, dass Schlechtsicht-(LV-) Bedingungen auftreten;
Neukonfigurieren der Avionikanzeige, um den LVO-Plan oder einen PTR-Plan darzustellen, der gemäß einem vorprogrammierten Visualisierungsschema zum Wiedergeben von LV-Merkmalen wiedergegeben wird, als Antwort auf das Bestimmen, dass die LV-Bedingungen auftreten;
Berechnen, unter Verwendung des Pfadberechnungsmoduls (222), einer optimierten Rollroute für das Flugzeug zu dem Zielflughafenpunkt von Interesse als eine Funktion des LVO-Plans, als Antwort auf das Bestimmen, dass LV-Bedingungen auftreten; und
Wiedergeben der optimierten Rollroute auf der neu konfigurierten Avionikanzeige, wobei der Zielflughafenpunkt von Interesse eine Zielrollbahn ist, und ferner umfassend:
Vorhersagen einer optimierten Rollbahn für das Flugzeug an dem Flughafen, als Antwort auf das Bestimmen, dass die LV-Bedingungen auftreten; und
Auffordern eines Benutzers, die optimierte Rollbahn anzufragen, wenn sie sich von der Zielrollbahn unterscheidet.

7. Verfahren nach Anspruch 6, ferner umfassend Wiedergeben der Avionikanzeige, sodass sie auf einem ersten Bereich eine AMM und auf einem zweiten Bereich ein veröffentlichtes LVO-Diagramm aufweist, als Antwort auf eine Benutzereingabe.

8. Verfahren nach Anspruch 6, ferner umfassend Empfangen des Zielflughafenpunkts von Interesse von einem Flugmanagementsystem (FMS).

9. Verfahren nach Anspruch 6, ferner umfassend Empfangen des Zielflughafenpunkts von Interesse von einer Benutzereingabeschnittstelle.

## Revendications

1. Système de guidage de mouvement au sol par faible visibilité pour un aéronef naviguant dans un environnement aéroportuaire, comprenant :
une source (20) de données d'état d'aéronef ;
un dispositif d'affichage (14) configuré pour restituer un affichage avionique représentant un emplacement et une trajectoire de l'aéronef, en utilisant les données d'état d'aéronef ;
une source (50) de données météorologiques, dans lequel la source de données météorologiques est une source de service météorologique externe ;
une source d'activation configurée pour fournir une activation d'un réglage de faible visibilité, dans lequel la source d'activation est un module de traitement météorologique (218) configuré pour recevoir des données météorologiques de la source de données météorologiques et pour traiter les données météorologiques pour déterminer, en utilisant divers seuils et algorithmes de décision, si des conditions de faible visibilité sont présentes au niveau d'un point d'intérêt aéroportuaire cible ;
une source (26) d'un plan d'opération par faible visibilité (LVO), le plan LVO fournissant une option de trajet de roulage par faible visibilité (LVTR) disponibles pour une cible d'opération de roulage au niveau de l'aéroport ;
une source (32) d'un schéma de visualisation, le schéma de visualisation étant un schéma destiné à restituer des caractéristiques de faible visibilité (LV) dans le plan LVO ; et
un circuit contrôleur (12) couplé de manière opérationnelle à la source de données d'état d'aéronef, au dispositif d'affichage, à la source du plan LVO, au module de traitement météorologique, à la source du schéma de visualisation et à la source de données météorologiques, le circuit contrôleur étant configuré pour :
recevoir l'activation du réglage de faible visibilité du module de traitement météorologique ;
déterminer que des conditions de faible visibilité (LV) sont présentes, en réponse à l'activation du réglage de faible visibilité ;
reconfigurer l'affichage avionique pour présenter le plan LVO, selon le schéma de visualisation, en réponse à la détermination que des conditions de LV sont présentes ;
dans lequel le système comprend en outre un module calculateur d'itinéraire (222) configuré pour calculer un trajet de roulage optimisé de l'aéronef jusqu'au point d'intérêt aéroportuaire cible, en fonction du plan LVO, en réponse à la détermination que les conditions de LV sont présentes ; et
restituer le trajet de roulage optimisé sur l'affichage avionique reconfiguré, et dans lequel le point d'intérêt aéroportuaire cible est une piste cible, et le circuit contrôleur (12) est en outre configuré pour :
prédire une piste optimisée pour l'aéronef au niveau de l'aéroport, en réponse à la détermination que des conditions de LV sont présentes ; et
inciter un utilisateur à demander la piste optimisée lorsqu'elle est différente de la piste cible.

2. Système selon la revendication 1, dans lequel l'affichage avionique est un affichage de vol principal (PFD) ou un affichage de navigation.

3. Système selon la revendication 1, dans lequel le circuit contrôleur est en outre configuré pour restituer l'affichage avionique pour avoir une carte mobile d'aéroport, AMM, sur une première zone et un graphique LVO publié sur une deuxième zone, en réponse à une entrée utilisateur.

4. Système selon la revendication 1, comprenant en outre un système de gestion de vol (28), FMS, et dans lequel le circuit contrôleur est en outre configuré pour recevoir le point d'intérêt aéroportuaire cible du FMS.

5. Système selon la revendication 1, comprenant en outre une interface d'entrée utilisateur (18), et dans lequel le circuit contrôleur est en outre configuré pour recevoir le point d'intérêt aéroportuaire cible de l'interface d'entrée utilisateur.

6. Procédé mis en œuvre par processeur pour fournir un guidage de mouvement au sol par faible visibilité pour un aéronef naviguant dans un environnement aéroportuaire, comprenant :
la restitution, sur un dispositif d'affichage, d'un affichage avionique représentant un emplacement et une trajectoire de l'aéronef, en utilisant des données d'état d'aéronef reçues ;
la réception de données météorologiques d'une source de service météorologique externe (50) ;
la détermination que des conditions de faible visibilité sont présentes en traitant les données météorologiques reçues pour déterminer, en utilisant divers seuils et algorithmes de décision, si des conditions de faible visibilité sont présentes au niveau d'un point d'intérêt aéroportuaire cible ;
le référencement d'un plan LVO fournissant une option disponible de trajet de roulage par faible visibilité (LVTR) pour une piste cible au niveau de l'aéroport, ou un trajet de roulage préféré (PTR), en réponse à la détermination que des conditions de faible visibilité (LV) sont présentes ;
la reconfiguration de l'affichage avionique pour présenter le plan LVO ou un plan PTR, restitué selon un schéma de visualisation préprogrammé de restitution de caractéristiques LV, en réponse à la détermination que des conditions LV sont présentes ;
le calcul, en utilisant un module calculateur d'itinéraire (222) d'un trajet de roulage optimisé pour l'aéronef vers le point d'intérêt aéroportuaire cible, en fonction du plan LVO, en réponse à la détermination que des conditions LV sont présentes ; et
la restitution du trajet de roulage optimisé sur l'affichage avionique reconfiguré, dans lequel le point d'intérêt aéroportuaire cible est une piste cible, et comprenant en outre :
la prédiction d'une piste optimisée pour l'aéronef au niveau de l'aéroport, en réponse à la détermination que des conditions de LV sont présentes ; et
l'incitation d'un utilisateur à demander la piste optimisée lorsqu'elle est différente de la piste cible.

7. Procédé selon la revendication 6, comprenant en outre la restitution de l'affichage avionique pour avoir une AMM sur une première zone et un graphique LVO sur une deuxième zone, en réponse à une entrée utilisateur.

8. Procédé selon la revendication 6, comprenant en outre la réception du point d'intérêt aéroportuaire cible d'un système de gestion de vol (FMS).

9. Procédé selon la revendication 6, comprenant en outre la réception du point d'intérêt aéroportuaire cible d'une interface d'entrée utilisateur.
